# EUROPÄISCHE PATENTSCHRIFT

(11) **EP 4 321 275 B1**
(45) Veröffentlichungstag und Bekanntmachung des Hinweises auf die Patenterteilung: **05.03.2025**
(21) Anmeldenummer: 23157162.1
(22) Anmeldetag: 17.02.2023
(51) Int. Cl.: B22D 11/128, F16C 13/02, F16C 37/00

(54) **STRANGFÜHRUNGSROLLE ZUM FÜHREN EINES METALLISCHEN STRANGS IN EINER STRANGGIESSANLAGE**
STRAND GUIDING ROLLER FOR GUIDING A METAL STRAND IN A CONTINUOUS CASTING INSTALLATION
ROULEAU DE GUIDAGE DE BARRE POUR GUIDER UNE BARRE MÉTALLIQUE DANS UNE INSTALLATION DE COULÉE CONTINUE

(30) Priorität: 09.08.2022 AT 506052022
(43) Veröffentlichungstag der Anmeldung: 14.02.2024
(73) Patentinhaber: Primetals Technologies Austria GmbH, 4031 Linz (AT)
(72) Erfinder: Ziegler, Guenter, 4470 Enns (AT); Poeppl, Johann, 4202 Kirchschlag (AT); Wimmer, Franz, 4752 Riedau (AT)
(74) Vertreter: Metals@Linz

(56) Entgegenhaltungen:
- US-A1- 2012 043 047

## Beschreibung

### Gebiet der Technik

Die Erfindung betrifft eine Strangführungsrolle zum Führen eines metallischen Strangs in einer Stranggießanlage.

### Stand der Technik

Beim Stranggießen wird ein in einer Kokille gebildeter metallischer Strang in einer Strangführung geführt, gestützt und weiter abgekühlt. Üblicherweise erfolgt das Stützen und Führen des teil- oder durcherstarrten Strangs durch sogenannte Strangführungsrollen. Außerdem kann der Strang durch gekühlte Strangführungsrollen weiter abgekühlt werden.

Aus dem Stand der Technik sind sogenannte peripheriegekühlte Strangführungsrollen bekannt. Dabei sind oftmals mehrere Rollenmäntel an einer gemeinsamen rotierenden Welle angeordnet, die an ihren Enden und zwischen den Rollenmänteln durch Wälzlager gestützt wird. Bei der Peripheriekühlung wird die Innenseite der Rollenmäntel direkt mit einer Kühlflüssigkeit (in der Regel Wasser) gekühlt.

Die Lager der Strangführungsrollen befinden sich üblicherweise in Lagerböcken, die durch einen Wasserkreislauf gekühlt werden. Dabei muss konstruktiv darauf geachtet werden, dass kein Wasser in die Lager gelangt. Dies wird oftmals durch eine Sperrschmierung erreicht, für die eine zusätzliche Fettmenge in die Lager eingebracht wird, d. h. eine Fettmenge, die für die eigentliche Funktion der Wälzlager nicht notwendig ist und lediglich das Eindringen von Wasser in die Lager verhindert. Um das Eindringen von Wasser zu verhindern, tritt die zusätzliche Fettmenge aus dem Lagern aus, vermischt sich mit dem Kühlwasser und muss mit einem hohen technischen Aufwand wieder abgetrennt werden.

Bei Strangführungsrollen mit peripheriegekühlten Rollenmänteln werden die Rollenmäntel in der Regel mit einem weiteren Wasserkreislauf gekühlt, wobei das Kühlwasser mittels einer separaten Dreheinführung eingebracht wird, die eine aufwändige und sensible Komponente für die Funktion der Strangführungsrolle ist.

Es ist aus AT517521A1 auch bekannt, eine Strangführungsrolle zum Führen eines metallischen Strangs in einer Stranggießanlage umfassend wenigstens zwei Stützblöcke (auch Lagerböcke genannt) und eine feststehende Achse zur drehsteifen Verbindung der Stützblöcke miteinander zu verwenden. Dabei wird ein einen Achsenabschnitt der Achse koaxial umgebender Rollenmantel über wenigstens einen Kühlkanal zur Aufnahme eines Kühlfluids gekühlt. Der Kühlkanal wird in axialer Richtung durch zumindest einen Dichtungshalter, der auf der Außenseite zwischen dem Dichtungshalter und dem Rollenmantel wenigstens eine dynamische Dichtung (z.B. einen Gleitring) und auf der Innenseite zwischen der Achse und dem Dichtungshalter wenigstens eine statische Abdichtung (z.B. eine druckdichte Schweißnaht oder einen O-Ring) aufweist, abgedichtet. Ferner weist die Strangführungsrolle für jeden Rollenmantel wenigstens ein zwischen dem von dem Rollenmantel umgebenen Achsenabschnitt und dem Rollenmantel angeordnetes Gleitlager auf zur um die Achse drehbaren Lagerung des Rollenmantels. Dabei wird jedes Gleitlager im Betrieb von dem Kühlfluid beaufschlagt, d.h. die Gleitlager sind zum Betrieb in dem Kühlfluid ausgebildet.

Aus US2012043047 ist eine Rolle und eine Rollenanordnung für eine Stranggießanlage mit zwei Lagerböcken bekannt. Die Rolle wird von diesen Lagerböcken getragenen, wobei die Rolle einen rotationssymmetrischen Rollenmantel aufweist und wobei das Rollenlager innerhalb des Rollenmantels angeordnet ist.

Die Kühlung des Lagers ist ein kritischer Faktor im Betrieb; bei Überhitzung kann es zu Lagerschäden kommen. Speziell falls externe Kühlungen für die Strangführungsrollen versagen - beispielsweise, weil Düsen einer externen Spritzkühlung versagen - kann die Temperaturbelastung der Lager infolge Erhitzung der Strangführungsrolle zunehmen. Aber auch bei Trockenkühlung ist Vermeidung einer Überhitzung der Lager problematisch.

### Zusammenfassung der Erfindung

### Technische Aufgabe

Der Erfindung liegt die Aufgabe zugrunde, eine Möglichkeit anzugeben, Lagerungen von Strangführungsrollen mit feststehender Achse zuverlässig vor Überhitzung zu schützen.

Die Aufgabe wird erfindungsgemäß durch die Strangführungsrolle nach Anspruch 1 gelöst.

Vorteilhafte Ausgestaltungen der Erfindung sind Gegenstand der Unteransprüche.

Eine erfindungsgemäße Strangführungsrolle umfasst
- zumindest zwei Stützblöcke,
- eine feststehende Achse, die die zwei Stützblöcke drehsteif miteinander verbindet, und die entlang ihrer Längserstreckung zumindest abschnittsweise einen Hohlraum aufweist,
- wenigstens einen zumindest einen Achsenabschnitt der Achse koaxial umgebenden Rollenmantel,
- für jeden Rollenmantel wenigstens einen Kühlkanal zur Aufnahme eines Kühlfluids zur Kühlung des Rollenmantels,
dadurch gekennzeichnet, dass
- für jeden Rollenmantel wenigstens ein, bevorzugt zwei, zwischen einem von dem Rollenmantel umgebenen Achsenabschnitt und dem Rollenmantel angeordnetes Lager, bevorzugt Wälzlager, zur um die Achse drehbaren Lagerung des Rollenmantels vorhanden ist,
- wobei jedes Lager in einer Lagertragbüchse angeordnet ist, die zwischen einem von dem Rollenmantel umgebenen Achsenabschnitt und dem Rollenmantel angeordnet ist,
- wobei zwischen der Lagertragbüchse und dem Rollenmantel zumindest ein Kanal vorhanden ist, und wobei zwischen der Lagertragbüchse und der Achse zumindest ein Kanal vorhanden ist,
- und wobei zumindest ein Kanal vorhanden ist, der den Hohlraum in der Achse mit dem Kanal zwischen der Lagertragbüchse und der Achse verbindet,
   und zumindest ein Kanal vorhanden ist, der den Hohlraum in der Achse oder den Kanal zwischen der Lagertragbüchse und der Achse mit dem Kanal zwischen der Lagertragbüchse und dem Rollenmantel verbindet,
- und wobei in der Lagertragbüchse zumindest ein Kanal vorhanden ist, der den Kanal zwischen der Lagertragbüchse und der Achse
   und/oder
   den Kanal zwischen der Lagertragbüchse und dem Rollenmantel mit dem Kühlkanal zur Aufnahme eines Kühlfluids zur Kühlung des Rollenmantels verbindet.

Die Achse kann auch entlang ihrer gesamten Längserstreckung einen Hohlraum aufweisen.

Bevorzugt sind der oder die Hohlräume koaxial zentral angeordnet, das heißt, die Längsachse der Achse verläuft durch sie.

Bei dem Lager handelt es sich bevorzugt um ein Wälzlager; bei einem Wälzlager handelt es sich bevorzugt um ein Federbüchsenlager.

Die Lagertragbüchse ist zwischen einem von dem Rollenmantel umgebenen Achsenabschnitt und dem Rollenmantel angeordnet.

Der Kanal zwischen der Lagertragbüchse und dem Rollenmantel ist bevorzugt umlaufend um die Lagertragbüchse ausgeführt.

Der Kanal zwischen der Lagertragbüchse und der Achse ist bevorzugt umlaufend um die Achse ausgeführt.

Wenn mehr als ein Kanal den Hohlraum in der Achse mit dem Kanal zwischen der Lagertragbüchse und der Achse, oder mit dem Kanal zwischen der Lagertragbüchse und dem Rollenmantel verbindet, also mehrere solche Kanäle vorhanden sind, dann sind sie beispielsweise bei zwei Kanälen am Umfang bevorzugt um je 180° versetzt, oder bei drei Kanälen am Umfang bevorzugt um je 120° versetzt, oder vier Kanälen am Umfang bevorzugt um je 90° versetzt.

Der Kanal, der den Hohlraum in der Achse oder den Kanal zwischen der Lagertragbüchse und der Achse mit dem Kanal zwischen der Lagertragbüchse und dem Rollenmantel verbindet, kann eine Verlängerung des Kanals sein, der den Hohlraum in der Achse mit dem Kanal zwischen der Lagertragbüchse und der Achse verbindet.

Die Hohlräume in der Achse, die Kanäle zwischen der Lagertragbüchse und der Achse, und die Kanäle zwischen der Lagertragbüchse und dem Rollenmantel sind geeignet, Kühlfluid zu leiten. Mit durch die Hohlräume und die Kanäle geleitetem Kühlfluid kann die Strangführungsrolle beziehungsweise ihre Lager von innen gekühlt werden.

Der Hohlraum in der Achse kann gegebenenfalls Pfropfen aufweisen, die Fluss von Kühlfluid entlang seiner Längserstreckung unterbinden und das Kühlfluid so in die Kanäle lenken.

Der Kühlkanal zur Aufnahme eines Kühlfluids zur Kühlung des Rollenmantels kann beispielsweise als Hohlraum zwischen Achse und Rollenmantel ausgeführt sein.

Kühlfluid ist beispielsweise Wasser, gegebenenfalls mit Zusätzen, beispielsweise Zusätzen zur Verbesserung der Kühlwirkung - beispielsweise Nanofluids -, Zusätzen zum Korrosionsschutz.

Zwischen der Lagertragbüchse und der Achse können Dichtungen vorhanden sein; sowohl zur Abdichtung der Kanäle und des Lagers voneinander, als auch zur Abdichtung des Lagerinnenraums gegen die Außenwelt außerhalb der Strangführungsrolle. Der Lagerinnenraum ist beispielsweise fettgeschmiert - Eindringen von Kühlfluid in das Schmierfett beziehungsweise Austritt von Schmierfett in die Außenwelt, aber auch Schmutzeintritt in den Lagerinnenraum sollen vermieden werden.

Die Lagertragbüchse ist im Rollenmantel beziehungsweise auf der Achse beispielsweise durch Schrumpfung oder durch Schweißung oder durch Klebung befestigt.

Die erfindungsgemäßen Strangführungsrollen sind also als "Mantelrollen" ausgebildet, deren Rollenmäntel um eine feststehende Achse drehbar gelagert sind. Derartige Strangführungsrollen sind einfacher gestaltet und daher kostengünstiger und wartungsfreundlicher als Strangführungsrollen mit fest an einer drehbaren Achse montierten Rollenmänteln. Da die Strangführungsrollen feststehende Achsen haben, kann außerdem vorteilhaft eine Lagerbockkühlung entfallen.

Durch den wenigstens einen Kühlkanal wird vorteilhaft auf einfache Weise eine Peripheriekühlung der Strangführungsrolle erreicht, ohne dass durch die Peripheriekühlung üblicherweise bei der Verwendung von Wälzlagern und/oder rotierenden Achsen auftretende Probleme bewältigt werden müssen. Da die Strangführungsrolle nämlich eine feststehende Achse aufweist, wird keine aufwändige und reparaturanfällige Dreheinführung zur Einbringung von Kühlflüssigkeit benötigt. Die Peripheriekühlung ermöglicht ferner die Verwendung der Strangführungsrolle für einen Trockengießbetrieb, das heißt ohne, dass der Strang beim Stranggießen durch das Bespritzen des Strangs mit Kühlflüssigkeit abgekühlt wird.

### Vorteilhafte Wirkungen der Erfindung

Die erfindungsgemäße Installation einer Lagertragbüchse, bei der Kanäle zwischen Rollenmantel und Lagertragbüchse sowie zwischen Lagertragbüchse und Achse gebildet werden, die mit Kühlkanälen zur Kühlung des Rollenmantels und mit dem Hohlraum der Achse verbunden sind, erlaubt es, Kühlfluid über die Achse lagernah in die Strangführungsrolle einzuführen und erst nach Durchlaufen der Lagertragbüchse zur Kühlung des Rollenmantels zu nutzen. Durch die Lagernähe wird erreicht, dass das Lager in der Lagertragbüchse intensiv gekühlt wird. Entsprechend gelingt es einfacher, die Temperatur des Lagers unterhalb eines kritischen Bereiches zu halten. Damit können gegebenenfalls negative Konsequenzen eines Ausfalls einer externen Kühlung abgefedert werden, beziehungsweise ist Trockengießbetrieb nicht problematisch.

Bevorzugt ist die Lagertragbüchse zumindest teilweise aus einem Material gefertigt, das im Vergleich zum Rollenmantel eine höhere Wärmeleitfähigkeit hat; beispielsweise durch Verwendung von Kupferlegierungen.

Nach einer Ausführungsform kann zwischen Lagertragbüchse und Rollenmantel ein Hohlraum mit Natriumfüllung vorgesehen werden; das kann zu verbesserten Kühlung des Lagers beitragen. Das Platzieren einer Natriumfüllung im Kontaktbereich zwischen der beispielsweise eingeschrumpften Lagertragbüchse eröffnet die die Möglichkeit für weitere Intensivierung der Wärmeabfuhr aus dem Lagerbereich. Bei Temperaturen der Lagertragbüchse über 100°C schmilzt das Natrium und gewährleistet mit der hohen Wärmeleitfähigkeit des flüssigen Natriums einen Abtransport der Wärme in den vom Strang beziehungsweise einer Bramme abgewandten Teil der Rolle. Ein Schrumpfsitz verhindert ein Austreten des flüssigen Natriums.

Ein weiterer Gegenstand der vorliegenden Anmeldung ist die Verwendung einer erfindungsgemäßen Strangführungsrolle zum Führen eines metallischen Strangs in einer Stranggießanlage.

Ein weiterer Gegenstand der vorliegenden Anmeldung ist eine Stranggießanlage mit mehreren hintereinander angeordneten erfindungsgemäßen Strangführungsrollen.

Eine Ausgestaltung der Erfindung sieht vor, dass entlang der Achse mehrere Rollenmäntel hintereinander angeordnet sind.

Wenn entlang der Achse mehrere Rollenmäntel hintereinander - in Längsrichtung der Achse gesehen - angeordnet sind, kann es sich beispielsweise um zwei Rollenmäntel, um drei Rollenmäntel, um vier Rollenmäntel, oder mehr als vier Rollenmäntel handeln.

Dadurch kann die Länge der einzelnen Rollenmäntel reduziert werden, was vorteilhaft die Herstellung und den Transport der Rollenmäntel vereinfacht und die Verwendung moderat ausgelegter Lager zur Lagerung der Rollenmäntel an der Achse ermöglicht. Außerdem ermöglicht eine Strangführungsrolle mit mehreren hintereinander angeordneten Rollenmänteln eine Zwischenunterstützung der Achse in Bereichen zwischen zwei benachbarten Rollenmänteln und dadurch eine Reduzierung von Verformungen durch die Belastung der Rollenmäntel während des Betriebes in einer Stranggießanlage. Die Achse kann, wenn Zwischenunterstützung gegeben ist, mehrteilig ausgeführt sein; beispielsweise bei einer Zwischenunterstützung zwei Achshälften, auf denen zwei Rollenmäntel hintereinander - in Längsrichtung der aus den zwei Achshälften bestehenden Achse gesehen - benachbart zueinander angeordnet sind. Fertigungstechnisch ist eine mehrteilige Ausführung der Achse vorteilhaft, weil die einzelnen Teile kompakter und einfacher zu fertigen sind als eine lange Achse.

Eine erfindungsgemäße Strangführungsrolle wird zum Führen eines metallischen Strangs in einer Stranggießanlage verwendet. Dabei brauchen nicht notwendig alle Rollenmäntel mit dem Kühlfluid gekühlt werden.

Eine Stranggießanlage weist mehrere hintereinander angeordnete erfindungsgemäße Strangführungsrollen mit den oben genannten Vorteilen auf.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
FIG 1 zeigt einen Endabschnitt einer Ausführungsform einer erfindungsgemäßen Strangführungsrolle schematisch und beispielhaft.
FIG 2 zeigt einen Schnitt durch eine Ausführungsform einer Lagertragbüchse schematisch und beispielhaft.
FIG 3 zeigt schematisch und beispielhaft eine Ausführungsform einer mehrteilig ausgeführten Achse.
FIG 4a und 4b zeigen schematisch und beispielhaft verschiedene Ansichten eines Schnittdarstellung durch eine Ausführungsform einer Lagertragbüchse.
FIG 5 zeigt einen Schnitt durch eine Ausführungsform einer Lagertragbüchse schematisch und beispielhaft.

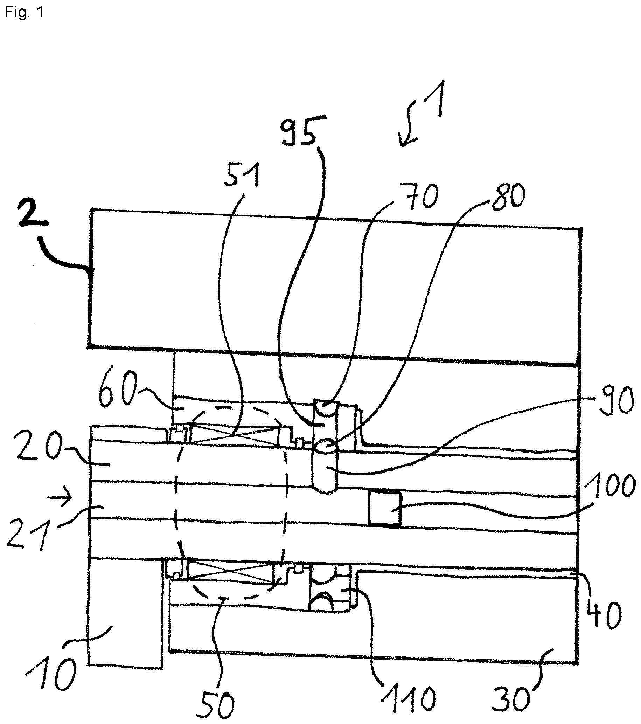

Figur 1 zeigt einen Endabschnitt einer erfindungsgemäßen Strangführungsrolle 1. Es ist ein Stützblock 10 zu sehen, in dem eine feststehende Achse 20 angeordnet ist. Die Achse 20 weist einen Hohlraum 21 auf. Zur besseren Übersichtlichkeit ist ein zweiter Stützblock, der über die Achse 20 drehsteif verbunden ist, nicht dargestellt. Der dargestellte Achsenabschnitt ist koaxial vom Rollenmantel 30 umgeben. Ein Kühlkanal 40 zur Aufnahme eines Kühlfluids zur Kühlung des Rollenmantels 30 ist vorhanden, hier ein Spalt als Hohlraum zwischen Rollenmantel 30 und Achse 20. Ein Bereich mit einem Lager 50 - beispielsweise ein Wälzlager wie ein Federbüchsenlager 51- zur drehbaren

Lagerung des Rollenmantels 30 ist strichliert umrandet dargestellt. Das Lager ist zwischen einem Abschnitt des Rollenmantels 30 und einem von ihm umgebenen Achsabschnitt angeordnet.

Erfindungsgemäß ist das Lager in einer Lagertragbüchse 60 angeordnet. Die Lagertragbüchse 60 ist zwischen einem Abschnitt des Rollenmantels 30 und einem von ihm umgebenen Achsabschnitt angeordnet.

Zwischen der Lagertragbüchse 60 und dem Rollenmantel 30 ist ein Kanal 70 vorhanden, und zwischen Lagertragbüchse 60 und Achse 20 ist ein Kanal 80 vorhanden. Dargestellt ist ein Kanal 90, der den Hohlraum 21 in der Achse 20 mit dem Kanal 80 zwischen der Lagertragbüchse 60 und der Achse 20 verbindet. Eine Verlängerung 95 des Kanals 90 verbindet den Hohlraum 21 in der Achse 20 oder den Kanal 80 zwischen der Lagertragbüchse 60 und der Achse 20 mit dem Kanal 70 zwischen der Lagertragbüchse 60 und dem Rollenmantel 30. Im Hohlraum 21 ist ein Pfropfen 100 angebracht. Kühlfluid, das in Richtung eines Pfeiles in Figur 1 von links in den Hohlraum 21 eingeleitet wird, strömt in die Kanäle 70, 80, 90, weil der Pfropfen 100 Fluss entlang der Längserstreckung der Achse unterbindet. Eine Verbindung zwischen dem Kanal zwischen der Lagertragbüchse und der Achse, und dem Kanal zwischen der Lagertragbüchse und dem Rollenmantel mit dem Kühlkanal ist über Kanal 110 gegeben.

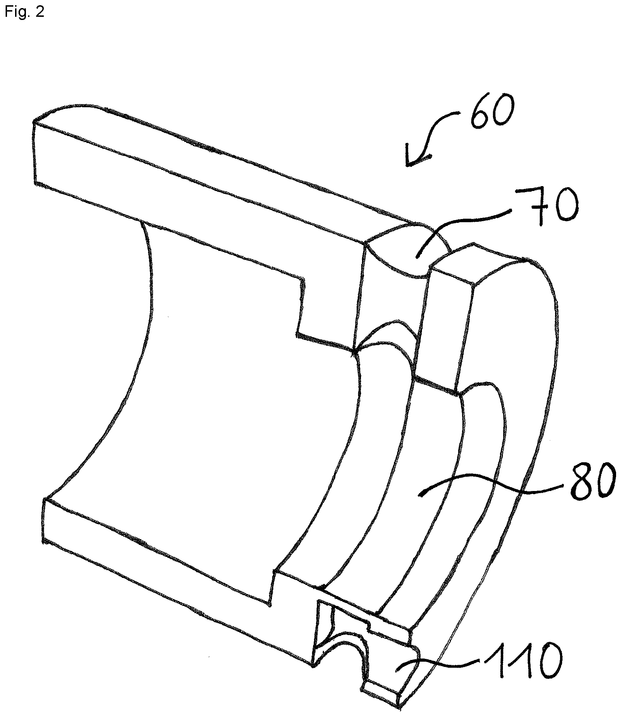

Figur 2 zeigt einen Schnitt durch eine Ausführungsform einer Lagertragbüchse 60. Zu sehen ist der umlaufende Kanal 70 zwischen der Lagertragbüchse 60 und dem nicht dargestellten Rollenmantel. Zu sehen ist der Kanal 80 zwischen der Lagertragbüchse 60 und der nicht dargestellten Achse. Ebenso zu sehen ist der den Kanal 80 und den Kanal 70 mit dem nicht dargestellten Kühlkanal verbindende Kanal 110.

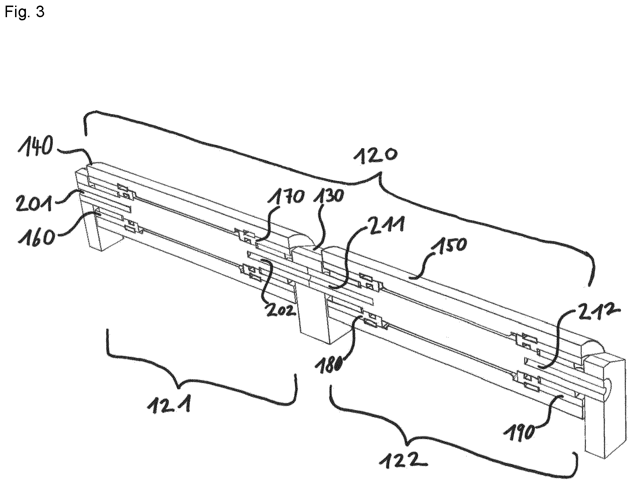

Figur 3 zeigt schematisch und beispielhaft eine Ausführungsform einer mehrteilig ausgeführten Achse 120; die mehrteilige Achse 120 wird aus den beiden Achshälften 121, 122 gebildet. Es ist ein Zwischenunterstützung 130 für die beiden Achshälften 121, 122 gegeben. Auf den beiden Achshälften 121, 122 sind zwei Rollenmäntel 140, 150 hintereinander - in Längsrichtung der Achse 120 gesehen - benachbart zueinander angeordnet. Die schematisch dargestellten vier Lagertragbüchsen 160, 170, 180, 190 an den Enden der beiden Achshälften 121,122 sind analog zu Figur 1 ausgeführt und werden hier nicht näher beschrieben. Die Achshälften 121, 122 weisen an ihren Enden jeweils einen Hohlraum auf - Achshälfte 121 die beiden Hohlräume 201, 202, und die Achshälfte 122 die beiden Hohlräume 211, 212. Gegenüber einem über die gesamte Längserstreckung der Achshälften verlaufenden Hohlraum, der dann analog zu Figur 1 mit Pfropfen zu verschließen wäre, ist das Vorsehen von zwei endseitigen Hohlraumbohrungen fertigungstechnisch einfacher zu bewerkstelligen.

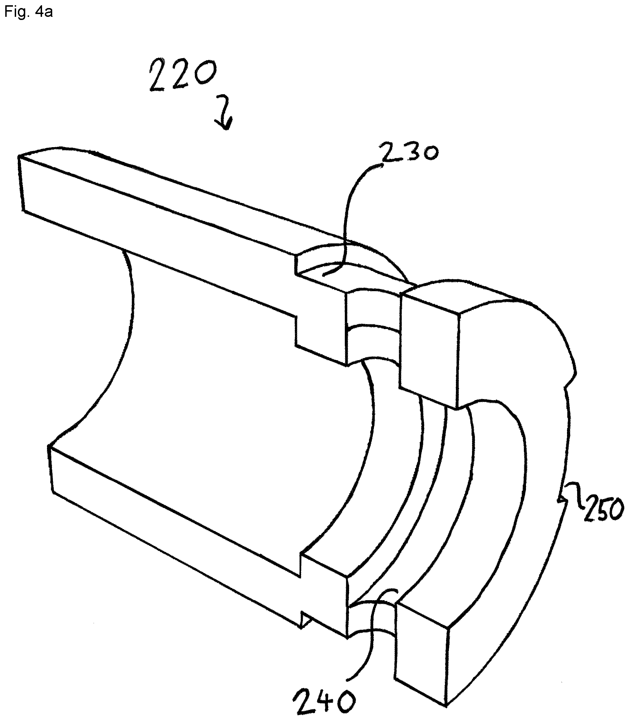

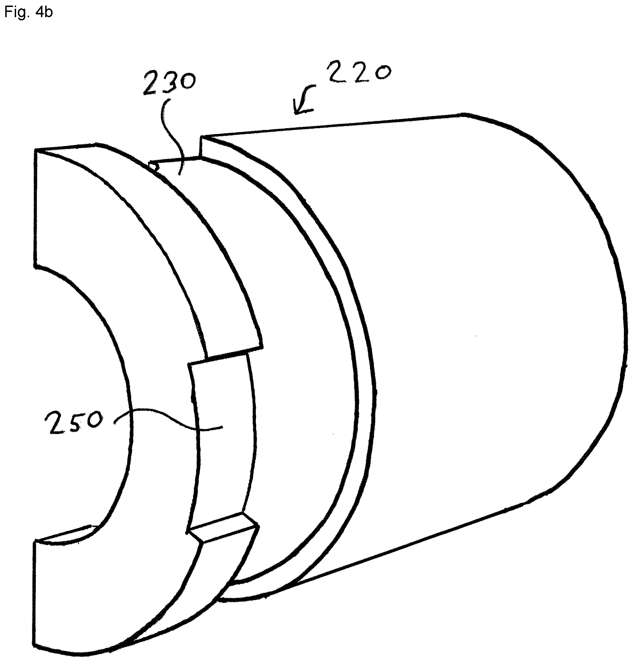

Figur 4a und Figur 4b zeigen verschiedene Ansichten eines Schnittdarstellung durch eine Ausführungsform einer Lagertragbüchse 220. Zu sehen ist der umlaufende Kanal 230 zwischen der Lagertragbüchse 220 und dem nicht dargestellten Rollenmantel. Zu sehen ist der Kanal 240 zwischen der Lagertragbüchse 220 und der nicht dargestellten Achse. Ebenso zu sehen ist der den Kanal 240 und den Kanal 230 mit dem nicht dargestellten Kühlkanal verbindende Kanal 250.

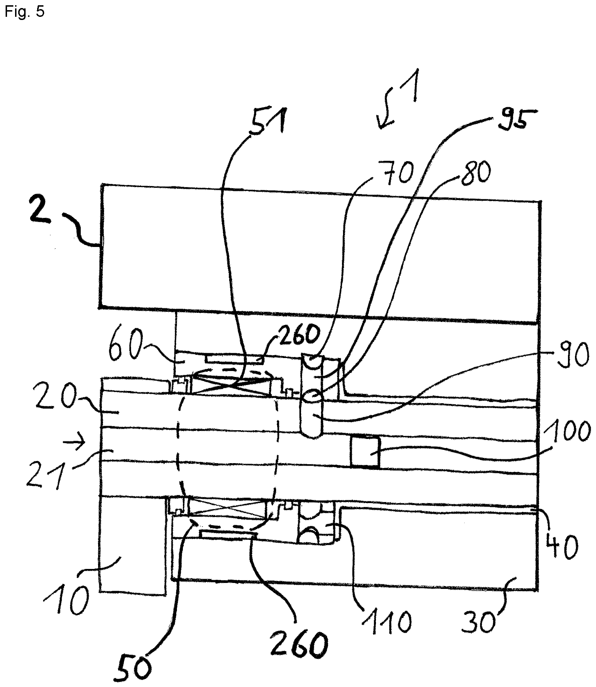

Figur 5 zeigt schematisch eine zu Figur 1 weitgehend analoge Ausführungsform, in der zwischen Lagertragbüchse 60 und Rollenmantel 30 ein Hohlraum 260 mit Natriumfüllung vorhanden ist.

### Bezugszeichenliste

- 1: Strangführungsrolle
- 2: Metallischer Strang
- 10: Stützblock
- 20: Achse
- 21: Hohlraum
- 30: Rollenmantel
- 40: Kühlkanal
- 50: Bereich mit einem Lager
- 51: Federbüchsenlager
- 60: Lagertragbüchse
- 70: Kanal
- 80: Kanal
- 90: Kanal
- 95: Verlängerung
- 100: Pfropfen
- 110: Kanal
- 120: Achse
- 121: Achshälfte
- 122: Achshälfte
- 130: Zwischenunterstützung
- 140: Rollenmantel
- 150: Rollenmantel
- 160: Lagertragbüchse
- 170: Lagertragbüchse
- 180: Lagertragbüchse
- 190: Lagertragbüchse
- 201: Hohlraum
- 202: Hohlraum
- 211: Hohlraum
- 212: Hohlraum
- 220: Lagertragbüchse
- 230: Kanal
- 240: Kanal
- 250: Kanal

## Patentansprüche

1. Strangführungsrolle (1) zum Führen eines metallischen Strangs in einer Stranggießanlage umfassend
- zumindest zwei Stützblöcke (10),
- eine feststehende Achse (20), die die zwei Stützblöcke (10) drehsteif miteinander verbindet, und die entlang ihrer Längserstreckung zumindest abschnittsweise einen Hohlraum (21) aufweist,
- wenigstens einen zumindest einen Achsenabschnitt der Achse (20) koaxial umgebenden Rollenmantel (30),
- für jeden Rollenmantel (30) wenigstens einen Kühlkanal (40) zur Aufnahme eines Kühlfluids zur Kühlung des Rollenmantels (30), wobei
- für jeden Rollenmantel (30) wenigstens ein, bevorzugt zwei, zwischen einem von dem Rollenmantel (30) umgebenen Achsenabschnitt und dem Rollenmantel (30) angeordnetes Lager, bevorzugt Wälzlager, zur um die Achse (20) drehbaren Lagerung des Rollenmantels (30) vorhanden ist,
- wobei jedes Lager in einer Lagertragbüchse (60) angeordnet ist, die zwischen einem von dem Rollenmantel (30) umgebenen Achsenabschnitt und dem Rollenmantel (30) angeordnet ist,
- wobei zwischen der Lagertragbüchse (60) und dem Rollenmantel (30) zumindest ein Kanal (70) vorhanden ist, und wobei zwischen der Lagertragbüchse (60) und der Achse (20) zumindest ein Kanal (80) vorhanden ist,
- und wobei zumindest ein Kanal (90) vorhanden ist, der den Hohlraum (21) in der Achse (20) mit dem Kanal (80) zwischen der Lagertragbüchse (60) und der Achse (20) verbindet, und zumindest ein Kanal vorhanden ist, der den Hohlraum (21) in der Achse (20) oder den Kanal (80) zwischen der Lagertragbüchse (60) und der Achse (20) mit dem Kanal (70) zwischen der Lagertragbüchse (60) und dem Rollenmantel (30) verbindet,
- und wobei in der Lagertragbüchse (60) zumindest ein Kanal (110) vorhanden ist, der den Kanal (80) zwischen der Lagertragbüchse (60) und der Achse (20)
und/oder
den Kanal (70) zwischen der Lagertragbüchse (60) und dem Rollenmantel (30) mit dem Kühlkanal (40) zur Aufnahme eines Kühlfluids zur Kühlung des Rollenmantels (30) verbindet.

2. Strangführungsrolle nach Anspruch 1, wobei das Lager ein Wälzlager ist, bevorzugt ein Federbüchsenlager (51).

## Claims

1. Strand guiding roller (1) for guiding a metallic strand in a continuous casting facility, comprising
- at least two support blocks (10);
- a stationary axle (20) which connects the two support blocks (10) to one another in a torsionally stiff manner, and which along its longitudinal extent has at least in portions a cavity (21);
- at least one roller jacket (30) which coaxially surrounds at least one axle portion of the axle (20);
- for each roller jacket (30) at least one cooling duct (40) for receiving a cooling fluid for cooling the roller jacket (30) ;
wherein
- there is for each roller jacket (30) at least one bearing, preferably two bearings, preferably rolling bearings, disposed between an axle portion surrounded by the roller jacket (30) and the roller jacket (30), for mounting the roller jacket (30) so as to be rotatable about the axle (20);
- wherein each bearing is disposed in a bearing support bushing (60) which is disposed between an axle portion surrounded by the roller jacket (30) and the roller jacket (30);
- wherein there is at least one duct (70) between the bearing support bushing (60) and the roller jacket (30), and wherein there is at least one duct (80) between the bearing support bushing (60) and the axle (20);
- and wherein there is at least one duct (90) which connects the cavity (21) in the axle (20) to the duct (80) between the bearing support bushing (60) and the axle (20), and there is at least one duct which connects the cavity (21) in the axle (20), or the duct (80) between the bearing support bushing (60) and the axle (20), to the duct (70) between the bearing support bushing (60) and the roller jacket (30);
- and wherein there is in the bearing support bushing (60) at least one duct (110) which connects the duct (80) between the bearing support bushing (60) and the axle (20), and/or the duct (70) between the bearing support bushing (60) and the roller jacket (30), to the cooling duct (40) for receiving a cooling fluid for cooling the roller jacket (30).

2. Strand guiding roller according to Claim 1, wherein the bearing is a rolling bearing, preferably a spring bushing bearing (51).

## Revendications

1. Galet de guidage de barre (1) pour guider une barre métallique dans une installation de coulée de barre, comprenant
- au moins deux blocs de support (10),
- un axe fixe (20) qui relie les deux blocs de support (10) entre eux de manière rigide en rotation et qui présente au moins par section un espace creux (21) le long de son extension longitudinale,
- au moins une enveloppe de rouleau (30) entourant coaxialement au moins un tronçon d'axe de l'axe (20),
- pour chaque enveloppe de rouleau (30), au moins un canal de refroidissement (40) destiné à recevoir un fluide de refroidissement pour refroidir l'enveloppe de rouleau (30), dans lequel
- pour chaque enveloppe de rouleau (30), il y a au moins un, de préférence deux, paliers, de préférence des paliers à roulement, disposés entre une section d'axe entourée par l'enveloppe de rouleau (30) et l'enveloppe de rouleau (30), pour le logement de l'enveloppe de rouleau (30) pouvant tourner autour de l'axe (20),
- dans lequel chaque palier est disposé dans un coussinet de support de palier (60) qui est disposé entre une partie d'axe entourée par l'enveloppe de rouleau (30) et l'enveloppe de rouleau (30),
- dans lequel il existe au moins un canal (70) entre le coussinet de support de palier (60) et l'enveloppe de rouleau (30), et dans lequel il existe au moins un canal (80) entre le coussinet de support de palier (60) et l'axe (20),
- et dans lequel il existe au moins un canal (90) qui relie la cavité (21) dans l'axe (20) au canal (80) entre le coussinet de support de palier (60) et l'axe (20), et il existe au moins un canal qui relie la cavité (21) dans l'axe (20) ou le canal (80) entre le coussinet de support de palier (60) et l'axe (20) au canal (70) entre le coussinet de support de palier (60) et l'enveloppe de rouleau (30),
- et dans lequel au moins un canal (110) est présent dans le coussinet de support de palier (60), lequel canal (80) est présent entre le coussinet de support de palier (60) et l'axe (20) et/ou
relie le canal (70) entre le coussinet de support de palier (60) et l'enveloppe de rouleau (30) au canal de refroidissement (40) pour recevoir un fluide de refroidissement pour refroidir l'enveloppe de rouleau (30).

2. Galet de guidage de barre selon la revendication 1, dans lequel le palier est un palier à roulement, de préférence un palier à douille à ressort (51).
